(19) Europäisches Patentamt / European Patent Office / Office européen des brevets

(11) **EP 1 659 679 B1**

(12) **EUROPEAN PATENT SPECIFICATION**

(45) Date of publication and mention
of the grant of the patent:
**18.05.2011  Bulletin 2011/20**

(51) Int Cl.:
***H02M 3/335*** *(2006.01)*

(21) Application number: **05110783.7**

(22) Date of filing: **16.11.2005**

(54) **Transition mode flyback power source and method for its operation**

Übergangsmodus-Sperrwandler und Verfahren zu dessen Betrieb

Convertisseur à transfert indirect à mode de transition et procédé pour son fonctionnement

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.11.2004  FI 20045444**

(43) Date of publication of application:
**24.05.2006  Bulletin 2006/21**

(73) Proprietor: **Teknoware Oy**
**15200 Lahti (FI)**

(72) Inventor: **Kataja, Jari**
**15200 Lahti (FI)**

(74) Representative: **Valkeiskangas, Tapio Lassi Paavali**
**Kolster Oy Ab**
**Iso Roobertinkatu 23**
**P.O. Box 148**
**00121 Helsinki (FI)**

(56) References cited:
**US-A- 4 586 120     US-A- 4 933 829**
**US-A- 5 668 704**

• C.ADRAGANA, G. GATTAVARI: "Flyback Converters with the L6561 PFC Controller" ST MICROELECTRONICS APPLICATION NOTE, [Online] vol. AN1060, January 2003 (2003-01), XP002509494 Retrieved from the Internet: URL: http://st.com/stonline/products/litera ture/an/5957.pdf> [retrieved on 2009-01-08]

**Description**

BACKGROUND OF THE INVENTION

The present invention relates to a power source of a Flyback type and to a method in connection with such a power source according to independent claims 1 and 5. Particularly, the invention relates to a TM-Flyback power source and a method enabling more accurate power control than before.

Flyback choppers are generally used as power sources for objects requiring low or medium power. The basic structure of a Flyback chopper is simple and its main circuit comprises only a few components. Such a power source is thus simple and inexpensive to implement but still reliable in use.

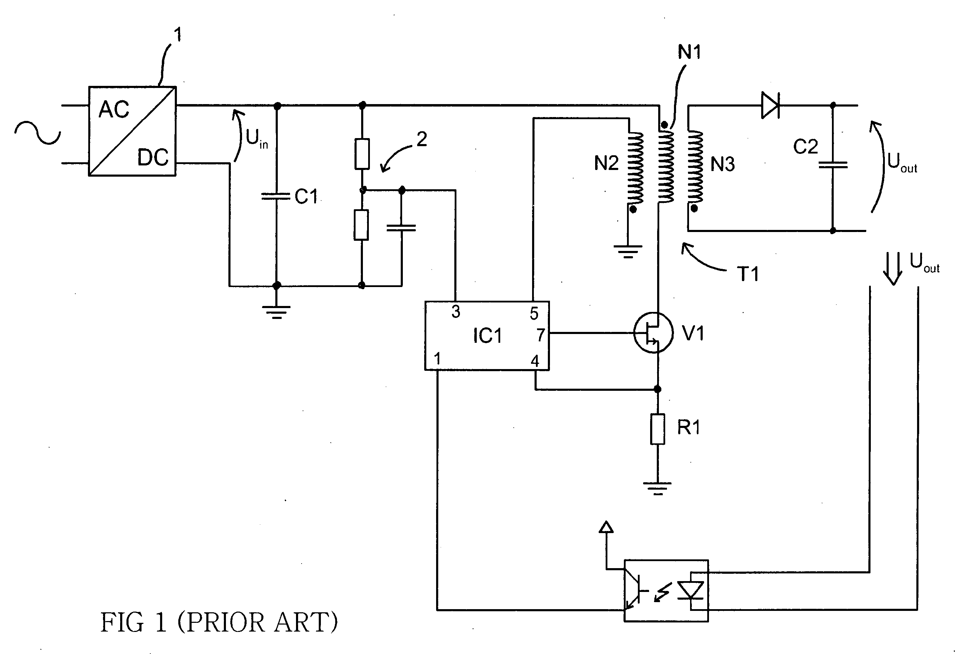

Figure 1 shows, on a principled level, a Transition Mode (TM) Flyback power source provided with a power factor correction circuit, in which an integrated circuit IC1 is connected to control functions. In the power source of Figure 1, the component V1 to be switched, for instance an FET switch, is controlled in turns into a conductive and a blocking state. In the conductive state, a current is passed through the switch and a coil N1 of a transformer T1, inducing a flux to the transformer. Due to the polarity of the transformer coils and a diode D1 connected to a coil N3, no current is passed through the coil N3 when the switch V1 is conductive. When the switch is controlled into the blocking state, the energy charged in the transformer begins to discharge, generating current in the circuit connected to the coil N3. The output voltage $U_{out}$ of the power source is obtained from a capacitor C2 charged via the coil N3.

In a Transition Mode Flyback connection, the switch component V1 is controlled in such a way that when the current of the transformer T1 drops to zero, the component is immediately switched conductive. Thus, both the operating frequency and the pulse ratio change as a function of the supply voltage and the load. In a conventional Flyback connection, only the pulse ratio is changed, whereby the peak current remains constant and the power can be increased as far as to the maximum limit of the pulse ratio. Since also the frequency changes in the TM connection, the restriction of power does not take place automatically.

Figure 1 shows a rectifier 1 for rectifying alternating voltage, such as mains voltage. Typically, a rectifier is formed of a diode bridge that generates, from the alternating voltage of the supply, pulse-like voltage to serve as direct voltage. To smooth this voltage, a capacitor C1 and a voltage divider connection 2 in parallel with it are connected, the voltage divider connection generating to the circuit IC1 a voltage message proportional to the voltage of the capacitor C1. Further, the connection of Figure 1 further comprises, as is typical of a TM-Flyback power source, a three-coil transformer, the current of the switch to be controlled flowing through the coil N1 of the transformer, and voltage being generated to the secondary side, to the output of the power source, via the coil N3. The transformer further comprises a coil N2 used to monitor the magnitude of the transformer current. The coil N2 is further connected to the circuit IC1.

A resistor R1 is connected on the current path of the switch component V1, the current of the switch component being measured as the voltage affecting over the resistor. This current information is supplied further to the circuit IC1. In addition, Figure 1 shows transmission of output voltage information $U_{out}$ from the secondary circuit to the function-controlling circuit IC1.

Such a circuit according to prior art, shown in Figure 1, functions in such a way that the circuit IC1 controls functions on the basis of the magnitude of the supply voltage and the magnitudes of the output voltage, the current of the primary circuit and the current of the transformer. The intention is to generate even voltage at the output $U_{out}$. This is implemented in such a way that the magnitude of the current of the switch is compared with a given current limit. The magnitude of the current limit is changed depending on both the output voltage and the supply voltage. The current limit is changed in such a way that when the supply voltage decreases, the current limit is also decreased, and when the load increases at the output, the current limit is also increased. The magnitude of the supply voltage is determined by means of the voltage divider connection 2, and the magnitude of the load directly affects the magnitude of the output voltage generated. Such a power source thus monitors the curve form of the supply voltage and changes the current limit of the primary coil in accordance with the supply voltage, whereby also the power factor of the power source is corrected. The envelope of the primary coil current resembles, in such a case, the curve form of the supply voltage.

Controlling the current limit in the above manner causes problems if a maximum limit has been set for the output power of the device. In TM-Flyback connections, monitoring the maximum of the output power is implemented either by measuring the current of the primary circuit switch or in the secondary circuit by measuring the current to the load. This often requires complex circuit solutions before the information on the secondary circuit has been successfully transmitted to the primary circuit side or before the value of the current of the switch component has been successfully modified into a suitable control signal.

When the current of the switch exceeds a predetermined current limit and the control circuit gives a command to turn off the current, the current will not be turned off immediately but only after a transmission delay. Thus, the real current of the primary circuit exceeds the limit value given to it. The extent of the exceeding depends on the magnitudes of the transmission delay, supply voltage, capacitance of the capacitor C1 and inductance of the primary circuit. The current of the primary circuit rises linearly, whereby an increase in the supply voltage directly affects the amount by which the current of the primary circuit exceeds the current limit. The transmission delay in the circuit is constant, being typically in the order of 50 to 200 ns. Thus, when the supply voltage changes with known TM-Flyback power sources, the current of the primary circuit does not remain constant, which is a problem with respect to the restriction of power.

Document US 4933829 discloses a Flyback converter in which the current limit of the power transistor is changed as a function of supply voltage by summing the voltage representing the sensed collector current of the power transistor with a voltage representing the supply voltage.

BRIEF DESCRIPTION OF THE INVENTION

An object of the invention is to provide a method and an apparatus implementing the method in such a way that the above problems can be solved. The object of the invention is achieved with a method and device characterized by what is stated in the independent claims. Preferred embodiments of the invention are described in the dependent claims.

The invention is based on the idea that the current limit of the primary side can be changed with a simple connection, depending on the supply voltage, in such a way that the current of the primary circuit can be kept substantially the same in a very large supply voltage area. This can be implemented by using a three-coil transformer used in TM-Flyback connections in a new way for modifying the current command, depending on the supply voltage.

An advantage of the method and apparatus according to the invention is the possibility to restrict the output power in a large supply voltage area by using a simple connection. Due to this, the overload information can be obtained as directly separated voltage information from the secondary circuit, and the circuit can be switched off in a simple manner without the foldback current limiting circuit generally used. Further, the connection and method according to the invention allow the current limit of the primary circuit to be set by using a low resistor value in the primary circuit for generating a voltage signal. This reduces the number of losses in the power source significantly and improves thus the overall efficiency. Further, the costs relating to the circuit will be lower than before because a low-power resistor is sufficient to replace the high-power resistor used before or even the current transformer.

BRIEF DESCRIPTION OF THE DRAWINGS

The invention will now be described in greater detail in connection with preferred embodiments, referring to the attached drawings, of which:

Figure 1 shows a principled connection of a TM-Flyback power source according to prior art;
Figure 2 shows invention-related functions of an integrated circuit used in an embodiment of the invention; and
Figure 3 shows a principled connection of an embodiment of a TM-Flyback power source according to the invention.

DETAILED DESCRIPTION OF THE INVENTION

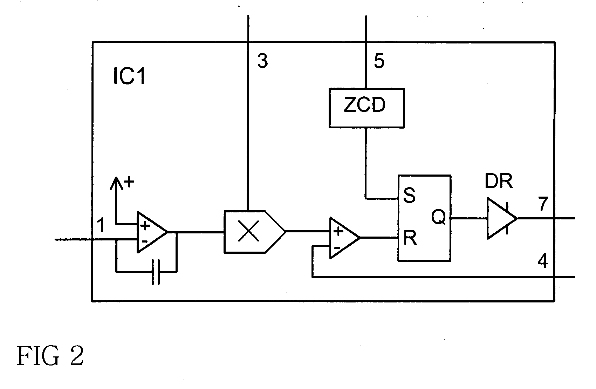

Figure 2 shows, with regard to the operation of the method and device of the invention, essential parts of an integrated circuit intended for controlling TM-Flyback power sources. The circuit is, for example, a circuit of the type L6561 of the company STMicroelectronics, intended particularly for controlling a TM-Flyback transformer with a high power factor. It is clear that although in this description it is specifically the L6561 circuit that is used as an example, the device and method according to the invention can also be implemented by using other commercial circuits or circuits manufactured of discreet components.

As seen from Figure 1, the circuit IC1, which is for instance L6561, receives the voltage information on the magnitude of the supply voltage as inputs to a pin 3. Further, a pin 5 receives information on the current of the auxiliary coil N2 of the transformer T1, a pin 4 receives voltage information on the current of the switch and of the primary circuit of the transformer, and a pin 1 receives voltage information on the voltage $U_{out}$ of the secondary circuit. Further, the pin 7 of the circuit IC1 is arranged to control a semiconductor switch V1 to be controlled. Correspondingly, the numbered pins are shown in Figure 2, which illustrates the internal structure of the circuit IC1 of Figure 1 with respect to some essential aspects of the invention.

The circuit shown in Figure 2 operates as the controller of the TM-Flyback circuit functions, as described in the following. Information on the magnitude of the output voltage is brought to the pin 1. This information is scaled appropriately in such a way that it can be compared with the internal voltage of 2.5 V of the circuit IC1 in the voltage controller VC. The output of the voltage controller is taken to a MULT unit that receives, in the second input pin 3, information on the magnitude of the supply voltage. The MULT unit multiplies these two pieces of information with each other and generates thus a current command for the comparing member COMP that compares the voltage information on the measured current, brought to the pin 4, with the current command.

The output of the comparing member COMP changes its state, depending on which is greater, the current command or the measured current value. Connected to this output there is an SR flip-flop generating the actual switch command, which is further amplified to be suitable for the switch component with a controller circuit DR that generates a gate voltage in the pin 7 to control the semiconductor switch.

Connected to the S pole of the SR flip-flop there is a zero current detection circuit ZCD that receives its input from the pin 5, which is, in turn, connected to the auxiliary coil N2 of the transformer. When the current of the auxiliary coil becomes zero, the whole of the magnetic flux has disappeared from the transformer, whereby the switch component is controlled to be conductive in accordance with the Transition Mode operating principle. Detecting that the current has dropped to zero, the output of the ZCD circuit rises up, whereby the output of the SR flip-flop also rises up and the controller circuit DR further controls the switch component into a conductive state. The control of the component is stopped when the current of the component has risen over the current limit, whereby the output of the SR flip-flop changes its state, controlled by the comparing circuit COMP.

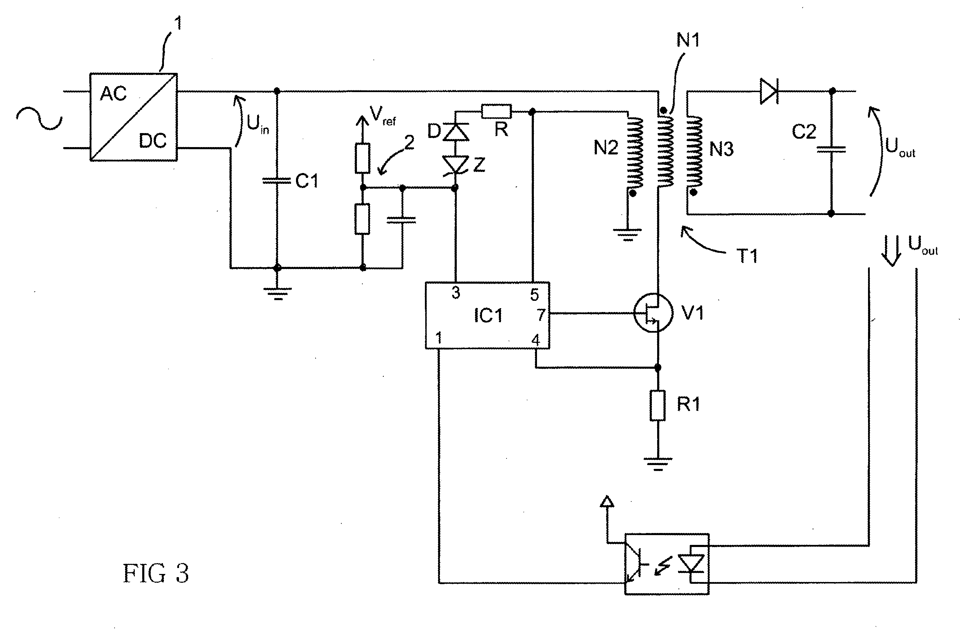

Figure 3 shows, on a principled level, a connection according to a preferred embodiment of the invention, based to a great extent on a conventional TM-Flyback power source shown in Figure 1 and explained earlier. In the connection according to the embodiment, the coil N2 of the transformer T1 is connected via a resistor R, diode D and Zener diode Z to the pin 3 of the integrated circuit. Deviating from an ordinary connection, also the voltage information on the reference voltage $V_{ref}$ is brought to the pin 3, which is the MULT input of the circuit IC1, as becomes apparent from Figure 3. The reference voltage is generated from a regulated voltage, such as the operating voltage of the circuit by means of resistor division 2. The purpose of this connection is to change, according to the invention, the voltage of the MULT input by utilizing the current command of the primary circuit in response to the magnitude of the supply voltage. The connection functions in such a way that the higher the supply voltage, the lower the MULT input of the circuit IC1 is drawn. This is because when the controllable switch component gets into a conductive state, the end connected to the resistor R of the coil N2 becomes negative in accordance with the equation

$$U_{N1} = (U_{in}-U_{out})xN_2/N_1,$$

where $U_{in}$ is the magnitude of the supply voltage, $U_{out}$ is the magnitude of the output voltage, $N_2$ is the number of coil turns of the coil N2, and correspondingly, $N_1$ is the number of coil turns of the coil N1. It is seen from the equation that the higher the supply voltage, the lower the MULT input of the circuit IC1 is drawn. This, in turn, results in the current limit remaining the same irrespective of the magnitude of the supply voltage. The device according to the invention thus utilizes the zero current measuring coil, which is already available in the TM-flyback topology, for setting the current limit in response to the magnitude of the supply voltage.

According to a preferred embodiment of the invention, in the start-up of the power source the current limit is kept higher for a desired period of time. This is implemented connectionwise in such a way that the coil N2 is connected to the desired MULT input via the resistor R, diode D and Zener diode Z. By means of the Zener diode, such a condition is prevented in which no current would pass through the resistor R before the start-up of the device, whereby the voltage of the MULT input of the IC1 circuit is at the beginning slightly higher, as is also the current limit. Such a procedure is important in a connection with loads that require higher power at the start-up stage. The magnitude of the resistor R determines, together with the resistor division circuit, how much the voltage of the MULT output is decreased when the supply voltage increases. The diode D, in turn, prevents the summing of the positive voltage of the end on the side of the resistor R of the coil N2 at the MULT input when the switch V1 is in the blocking state. With certain component selection, using a Zener diode Z is not necessary, but this leads to an undesired increase in the magnitude of the resistor R1. Similarly, if an operating voltage of about 15 V is generated from the zero-current coil N2 for the electric circuit, its negative voltage is, according to the preceding equation, high, whereby the resistor R may have to be of very high power if there is a voltage of several volts at the MULT input.

With respect to the operation of the device according to the invention, the supply voltage is preferably as even as possible. This can be affected particularly by selecting the filtering capacitor C1 to be as big as possible.

The method and device according to the invention enable restriction of the secondary circuit power without measuring of current at the secondary circuit. Since the manner of control is, as described above, such that the magnitude of the current remains constant when the load remains unchanged, the restriction of power can be implemented by monitoring the voltage in a simple manner. If the voltage of the secondary circuit does not rise to the intended level but drops, there is some overload in the secondary circuit. On the basis of the voltage information, the device can be switched off in a simple manner by stopping the modulation of the switch component. Neither Figure 1 nor Figure 3 shows the generation of the voltage information from the secondary circuit to the primary circuit in a detailed manner. It is, however, clear that the voltage can be determined by using for instance resistive voltage division, as on the supply side.

It is to be noted that the embodiment of the invention explained in relation to Figure 3 corresponds, with respect to its functioning, to the circuit explained in relation to Figure 1, except for the characterizing features of the invention. In addition, only those features of the function-controlling integrated circuit IC1 have been explained that directly affect the functioning of the solution according to the invention.

**Claims**

1. A method in connection with a Transition Mode Flyback power source, comprising the steps of generating direct voltage ($U_{in}$) as supply voltage for the power source; controlling a switch component (V1) of a primary circuit into a conductive state; determining a magnitude of the output voltage ($U_{out}$); forming a current limit for the current of the primary circuit in response to magnitudes of the supply voltage and the output voltage in such a way that the current limit is decreased when the supply voltage increases and increased when the supply voltage decreases.; determining a magnitude of the primary circuit current of the power source; and controlling the switch component (V1) of the primary circuit in turns into a conductive state and a blocking state, depending on the magnitude of the primary circuit current and the primary circuit current limit, **characterized by** utilizing a secondary coil (N2) of a transformer (T1) to monitor the magnitude of a transformer current for zero current detection and to receive information on the magnitude of the supply voltage ($U_{in}$)

2. A method according to claim 1, **characterized by** the forming of the current limit comprising the steps of generating direct voltage; changing the magnitude of the direct voltage in response to the magnitude of the supply voltage; and forming a current limit on the basis of the changed direct voltage and the output voltage.

3. A method according to claim 1 or 2, **characterized by** the method comprising in the start-up of the power source the step of keeping the current limit for a predetermined time at the start-up value, which is higher than the maximum current limit.

4. A method according to claim 1, 2 or 3, **characterized by** the method further comprising the steps of detecting that the output voltage remains under the set value; and stopping the control of the power source in response to the output voltage remaining under the set value.

5. A Transition Mode Flyback power source comprising means (1) for generating direct voltage as a supply voltage for the power source; a controllable switch component (V1) of a primary circuit; means for determining a magnitude of the output voltage ($U_{out}$); means for forming a current limit for the primary circuit current which means are arranged to decrease the current limit when the supply voltage increases and to increase the current limit when the supply voltage decreases;

means for determining a magnitude of the primary circuit current of the power source; and control means for controlling the switch component of the primary circuit in turns into a conductive state and a blocking state in response to the magnitude of the primary circuit current and the primary circuit current limit, **characterized in that** a secondary coil (N2) of a transformer (T1) is arranged to be utilized to monitor the magnitude of a transformer current for zero current detection and to receive information on the magnitude of the supply voltage ($U_{in}$).

6. A power source according to claim 5, **characterized in that** the means for forming the current limit comprise means for generating direct voltage; means for changing the magnitude of the direct voltage in response to the magnitude of the supply voltage; and means for forming the current limit on the basis of the changed direct voltage and the output voltage.

7. A power source according to any one of the preceding claims 5 or 6, **characterized in that** the means for forming the current limit for the primary circuit current and the control means for controlling the switch component in turns into the conductive state and the blocking state in response to the magnitude of the primary circuit current and the primary circuit current limit are formed of an integrated circuit.

8. A power source according any one of the preceding claims 5 or 7, **characterized in that** the secondary coil (N2) of the transformer (T1) is connected to an integrated circuit determining the current limit for the primary circuit current.

9. A power source according to claim 8, **characterized in that** the secondary coil (N2) of the transformer (T1) is connected to an integrated circuit via a resistor (R), diode (D) and Zener diode (Z) in such a way that the cathode of the diode (D) is connected towards the secondary circuit, and the anode of the Zener diode (Z) is connected towards the secondary circuit.

10. A power source according to any one of the preceding claims 5 to 9, **characterized in that** the secondary coil (N2) of the transformer (T1) is further connected to the zero current detection circuit of the integrated circuit.

**Patentansprüche**

1. Verfahren in Verbindung mit einer Übergangsmodus-Sperrwandler-Stromquelle, das folgende Schritte umfasst:

- Erzeugen einer Gleichspannung ($U_{in}$) als Versorgungsspannung für die Stromquelle;
- Ansteuern eines Schaltelements (V1) eines Primärkreises in einen leitenden Zustand;
- Ermitteln der Größe der Ausgangsspannung ($U_{out}$);
- Bilden eines Stromgrenzwerts für den Strom des Primärkreises in Reaktion auf Größen der Versorgungsspannung und der Ausgangsspannung auf eine Weise, dass der Stromgrenzwert bei zunehmender Versorgungsspannung verringert wird und bei abnehmender Versorgungsspannung erhöht wird;
- Ermitteln einer Größe des Primärkreisstroms der Stromquelle und
- Ansteuern des Schaltelements (V1) des Primärkreises im Wechsel in einen leitenden und in einen sperrenden Zustand, abhängig von der Größe des Primärkreisstroms und des Primärkreisstromgrenzwerts,

**dadurch gekennzeichnet, dass** eine Sekundärspule (N2) eines Transformators (T1) verwendet wird

- um die Größe eines Transformatorstroms zur Erkennung eines Nullstroms zu überwachen und
- um Informationen über die Größe der Versorgungsspannung ($U_{in}$) zu erhalten.

2. Verfahren gemäß Anspruch 1, **dadurch gekennzeichnet, dass** das Bilden des Stromgrenzwerts folgende Schritte umfasst:

- Erzeugen einer Gleichspannung;
- Ändern der Größe der Gleichspannung in Reaktion auf die Größe der Versorgungsspannung und
- Bilden eines Stromgrenzwerts auf der Grundlage der veränderten Gleichspannung und der Ausgangsspannung.

3. Verfahren gemäß Anspruch 1 oder 2, **dadurch gekennzeichnet, dass** das Verfahren beim Hochlaufen der Stromquelle den Schritt des Aufrechterhaltens des Stromgrenzwerts für eine festgelegte Zeit auf dem Hochlaufwert umfasst, der höher ist als der maximale Stromgrenzwert.

4. Verfahren gemäß Anspruch 1, 2 oder 3, **dadurch gekennzeichnet, dass** das Verfahren weiter die folgenden Schritte umfasst: Erkennen, dass die Ausgangsspannung unter dem vorgegebenen Wert bleibt, und Beenden der Ansteuerung der Stromquelle in Reaktion darauf, dass die Ausgangsspannung unter dem vorgegebenen Wert bleibt.

5. Übergangsmodus-Sperrwandler-Stromquelle, umfassend:

- Mittel (1) zum Erzeugen einer Gleichspannung als eine Versorgungsspannung für die Stromquelle;
- ein ansteuerbares Schaltelement (V1) eines Primärkreises;
- Mittel zum Ermitteln einer Größe der Ausgangsspannung ($U_{out}$);
- Mittel zum Bilden eines Stromgrenzwerts für den Primärkreisstrom, die dafür vorgesehen sind, den Stromgrenzwert bei zunehmender Versorgungsspannung zu verringern und den Stromgrenzwert bei abnehmender Versorgungsspannung zu erhöhen;
- Mittel zum Ermitteln einer Größe des Primärkreisstroms der Stromquelle und
- Steuermittel zum Ansteuern des Schaltelements des Primärkreises im Wechsel in einen leitenden und in einen sperrenden Zustand in Reaktion auf die Größe des Primärkreisstroms und des Primärkreisstromgrenzwerts,

**dadurch gekennzeichnet, dass**
eine Sekundärspule (N2) eines Transformators (T1) dafür vorgesehen ist, verwendet zu werden,

- um die Größe eines Transformatorstroms zur Erkennung eines Nullstroms zu überwachen und
- um Informationen über die Größe der Versorgungsspannung ($U_{in}$) zu erhalten.

6. Stromquelle gemäß Anspruch 5, **dadurch gekennzeichnet, dass** die Mittel zum Bilden des Stromgrenzwerts Folgendes umfassen:

- Mittel zum Erzeugen einer Gleichspannung;
- Mittel zum Ändern der Größe der Gleichspannung in Reaktion auf die Größe der Versorgungsspannung und
- Mittel zum Bilden des Stromgrenzwerts auf der Grundlage der veränderten Gleichspannung und der Ausgangsspannung.

7. Stromquelle gemäß einem der vorstehenden Ansprüche 5 oder 6, **dadurch gekennzeichnet, dass** die Mittel zum Bilden des Stromgrenzwerts für den Primärkreisstrom und die Steuermittel zum Ansteuern des Schaltelements im Wechsel in einen leitenden und in einen sperrenden Zustand in Reaktion auf die Größe des Primärkreisstroms und des Primärkreisstromgrenzwerts als integrierte Schaltung ausgebildet sind.

**8.** Stromquelle gemäß einem der vorstehenden Ansprüche 5 oder 7, **dadurch gekennzeichnet, dass** die Sekundärspule (N2) des Transformators (T1) an eine integrierte Schaltung angeschlossen ist, die den Stromgrenzwert für den Primärkreisstrom ermittelt.

**9.** Stromquelle gemäß Anspruch 8, **dadurch gekennzeichnet, dass** die Sekundärspule (N2) des Transformators (T1) über einen Widerstand (R), eine Diode (D) und eine Zener-Diode (Z) so mit einer integrierten Schaltung verbunden ist, dass die Kathode der Diode (D) zum Sekundärkreis weisend angeschlossen und die Anode der Zener-Diode (Z) zum Sekundärkreis weisend angeschlossen ist.

**10.** Stromquelle gemäß einem der vorstehenden Ansprüche 5 bis 9, **dadurch gekennzeichnet, dass** die Sekundärspule (N2) des Transformators (T1) außerdem mit dem Nullstromerkennungskreis der integrierten Schaltung verbunden ist

**Revendications**

**1.** Procédé mettant en oeuvre un bloc d'alimentation à transfert indirect à mode de transition, comprenant les étapes consistant à
génrer une tension continue ($U_{in}$) en tant que tension d'entrée du bloc d'alimentation ;
faire passer un interrupteur (V1) d'un circuit primaire à l'état passant ;
déterminer une valeur de la tension de sortie ($U_{out}$) ;
établir une limite d'intensité pour le courant du circuit primaire en fonction des valeurs de la tension d'entrée et de la tension de sortie de telle sorte que la limite d'intensité soit diminuée lorsque la tension d'entrée augmente et augmentée lorsque la tension d'entrée diminue ;
déterminer une intensité du courant traversant le circuit primaire du bloc d'alimentation ; et
faire passer l'interrupteur (V1) du circuit primaire alternativement à l'état passant et à l'état bloqué, en fonction de l'intensité du courant traversant le circuit primaire et de la limite d'intensité du circuit primaire, **caractérisé par** l'utilisation d'un enroulement secondaire (N2) d'un transformateur (T1)
pour contrôler l'intensité d'un courant de transformateur afin de détecter une intensité nulle et
pour recevoir des informations sur la valeur de la tension d'entrée ($U_{in}$).

**2.** Procédé selon la revendication 1, **caractérisé par** l'établissement de la limite d'intensité de courant comprenant les étapes consistant à
générer une tension continue ;
modifier la valeur de la tension continue en fonction de la valeur de la tension d'entrée ; et
établir une limite d'intensité en fonction de la valeur modifiée de la tension continue et de la tension de sortie.

**3.** Procédé selon la revendication 1 ou la revendication 2, **caractérisé en ce qu'**il comprend, lors du démarrage du bloc d'alimentation, l'étape consistant à maintenir, pendant une période de temps prédéterminée, la limite d'intensité à la valeur de démarrage, qui est supérieure à la limite d'intensité maximale.

**4.** Procédé selon la revendication 1, 2 ou 3, **caractérisé en ce qu'**il comprend également les étapes consistant à détecter que la tension de sortie reste sous la valeur fixée ; et
arrêter de commander le bloc d'alimentation lorsque la tension de sortie reste sous la valeur fixée.

**5.** Bloc d'alimentation à transfert indirect à mode de transition comprenant
des moyens (1) pour générer une tension continue en tant que tension d'entrée du bloc d'alimentation ;
un interrupteur commandable (V1) d'un circuit primaire ;
des moyens pour déterminer une valeur de la tension de sortie ($V_{aut}$) ;
des moyens pour établir une limite d'intensité pour le courant traversant le circuit primaire, lesquels moyens sont agencés pour diminuer la limite d'intensité lorsque la tension d'entrée augmente et pour augmenter la limite d'intensité lorsque la tension d'entrée diminue ;
des moyens pour déterminer une intensité du courant traversant le circuit primaire du bloc d'alimentation ; et
des moyens de commande permettant de faire passer l'interrupteur du circuit primaire alternativement à l'état passant et à l'état bloqué en fonction de l'intensité du courant traversant le circuit primaire et de la limite d'intensité du circuit primaire,
**caractérisé en ce que**
un enroulement secondaire (N2) d'un transformateur (T1) est agencé pour être utilisé
pour contrôler l'intensité d'un courant de transformateur afin de détecter une intensité nulle et
pour recevoir des informations sur la valeur de la tension d'entrée ($U_{in}$).

**6.** Bloc d'alimentation selon la revendication 5, **caractérisé en ce que** les moyens pour fixer la limite d'intensité comprennent
des moyens pour générer une tension continue ;
des moyens pour modifier la valeur de la tension continue en fonction de la valeur de la tension d'entrée ; et
des moyens pour établir la limite d'intensité en fonction de la valeur modifiée de la tension continue et de la tension de sortie.

**7.** Bloc d'alimentation selon l'une quelconque des revendications précédentes 5 ou 6, **caractérisé en ce que** les moyens permettant d'établir la limite d'intensité pour le courant traversant le circuit primaire et les moyens de commande permettant de faire passer l'interrupteur alternativement à l'état passant et à l'état bloqué en fonction de l'intensité du courant traversant le circuit primaire et de la limite d'intensité du circuit primaire consistent en un circuit intégré.

**8.** Bloc d'alimentation selon l'une quelconque des revendications 5 ou 7, **caractérisé en ce que** l'enroulement secondaire (N2) du transformateur (T1) est raccordé à un circuit intégré déterminant la limite d'intensité du courant traversant le circuit primaire.

**9.** Bloc d'alimentation selon la revendication 8, **caractérisé en ce que** l'enroulement secondaire (N2) du transformateur (T1) est raccordé à un circuit intégré via une résistance (R), une diode (D) et une diode Zener (Z) de telle sorte que la cathode de la diode (D) est raccordée au circuit secondaire et que l'anode de la diode Zener (Z) est raccordée au circuit secondaire.

**10.** Bloc d'alimentation selon l'une quelconque des revendications précédentes 5 à 9, **caractérisé en ce que** l'enroulement secondaire (N2) du transformateur (T1) est de plus raccordé au circuit de détection d'intensité nulle du circuit intégré.

FIG 1 (PRIOR ART)

EP 1 659 679 B1

FIG 2

FIG 3

**REFERENCES CITED IN THE DESCRIPTION**

**Patent documents cited in the description**

• US 4933829 A